# EUROPEAN PATENT SPECIFICATION

(11) **EP 1 901 201 B1**
(45) Date of publication and mention of the grant of the patent: **17.11.2010**
(21) Application number: 07113200.5
(22) Date of filing: 26.07.2007
(51) Int. Cl.: G06K 7/00, G06F 21/00, H03M 13/09, H04L 1/00, H04L 9/00, H04L 29/06

(54) **RFID tag reader**
Lesegerät für RF-Etiketten
Lecteur d'étiquettes de radiofréquence

(30) Priority: 15.09.2006 JP 2006251448
(43) Date of publication of application: 19.03.2008
(73) Proprietor: Fujitsu Ltd., Kawasaki-shi, Kanagawa 211-8588 (JP)
(72) Inventor: Kimura, Shigekazu c/o FUJITSU LIMITED, Kawasaki-shi, Kanagawa 211-8588 (JP)
(74) Representative: Cooper-Rolfe, Elizabeth Louise

(56) References cited:
- US-A1- 2004 041 695
- US-A1- 2004 071 091
- "INFORMATION TECHNOLOGY-RFID FOR ITEM MANAGEMENT - PART 6: PARAMETERS ..." ISO, no. 18000-6, 15 August 2004 (2004-08-15), pages 1-143, XP001207216

## Description

### BACKGROUND OF THE INVENTION

### 1. Field of the Invention

The present invention relates to wireless communications performed between RF tags and RF tag readers, and more particularly to an RF tag reader and a method performed by the RF tag reader.

### 2. Description of the Related Art

In recent years and continuing, systems using RF tags (radio frequency tags) are attracting attention. These systems include RF tags and RF tag readers (or reader/writers). A reader/writer can read information from an RF tag and write information into an RF tag. A reader/writer is also referred to as an interrogator. An RF tag is also referred to as a wireless tag, an RFID, an RFID tag, an IC tag, an electronic tag, etc.

RF tags are generally categorized into active types and passive types. An active type RF tag is capable of generating power by itself, and therefore, the configuration of the RF tag reader can be simplified. A passive type RF tag cannot generate power by itself, and therefore, it receives energy from the outside to perform operations such as sending ID information. The passive type RF tag is preferable in terms of reducing cost, and holds great potential for the future.

There are two types of RF tags from the viewpoint of frequency bandwidths of signals exchanged: an electromagnetic coupling type and an electromagnetic wave type. The electromagnetic coupling type uses frequency bandwidths of a few KHz or around 13.5 MHz. The electromagnetic wave type uses a UHF band (e.g., 950 MHz) or a high frequency bandwidth of around 2.45 GHz. In terms of increasing the communication range, signals of high frequencies are preferably used.

In a system employing RF tags, some kind of data such as identification information (UID) is read from and written into RF tags to manage products, cargo, etc. RF tags can be appropriately used for various purposes other than managing products. For example, information indicating some kind of value such as a ticket or points can be read from and written into an RF tag. RF tags can also be used as electronic tickets or railway tickets in next-generation transportation systems, or as electronic money, etc.

Generally, communications between an RF tag and an RF tag reader are performed in a one-on-one manner, and communications with multiple RF tags are performed by a time division multiplex (TDM) method (one-on-one communication is performed in each time slot). In communications with an individual RF tag, the RF tag reader first sends a response request signal the RF tag, and then the RF tag responds by returning a packet including a UID. The RF tag reader determines whether there is an error in the packet. If there is no error, the RF tag reader processes the information received, and starts communicating with the next RF tag. If an error is detected in the received packet, the RF tag reader sends a resend request signal to the RF tag to resend the packet. The RF tag resends the packet including the UID in response to the resend request signal. In this manner, appropriate information is collected from each and every one of the RF tags. The operations of detecting errors and resending information performed in communications between RF tag and the RF tag reader are described, for example, in **standard ISO/IEC FDIS 18000-6: 2004 (E).**

Identification information (UID) stored and sent by each RF tag accompanying a management object includes, for example, an ISO header, an IC manufacturer code, a company code, a product code, and a product serial number. Generally, each UID is unique to an individual management object; however, part of the UID can be common to particular management objects. For example, depending on the purpose, one or more of the ISO header, the IC manufacturer code, the company code, and the product code may be common to multiple management objects. In such a case, even if information (for example, the company code) common to multiple management objects is erroneously received by the RF tag reader, it should be possible to correctly manage the product as long as the serial number is properly received. The company code is common to multiple management objects, and thus cannot be used for the purpose of distinguishing one product from another. In the event that a company code is necessary for some particular signal process, the company code can be easily acquired according to need because it is already known.

However, in the above-described control operation of resending packets, a packet is resent regardless of which part of the UID includes the error. In the above example, the RF tag reader may request the RF tag to resend the packet in the event that an error is detected in the company code. In response to the request, the RF tag resends the entire packet including the UID. That is, if information necessary for distinguishing the product from others is properly received but an error is found in the information unnecessary for distinguishing the product, the entire packet is resent. Thus, the RF tag indiscriminately resends parts of the packet that do not really need to be resent. This increases the time required for reading information of each RF tag, which leads to degraded throughput.

### SUMMARY OF THE INVENTION

The present invention provides an RF tag reader and method in which one or more of the above-described disadvantages are eliminated, and
reduces the number of times that an RF tag reader requests an RF tag to resend a packet.

The invention is defined by the independent claims.

The dependent claims are directed to preferred embodiments.

### BRIEF DESCRIPTION OF THE DRAWINGS

Other objects, features and advantages of the present invention will become more apparent from the following detailed description when read in conjunction with the accompanying drawings, in which:
FIG. 1 is a functional block diagram of a reader/writer according to an embodiment of the present invention;
FIG. 2 is a flowchart of an operation of the reader/writer according to the embodiment of the present invention;
FIG. 3 illustrates an example of a signal transmitted by an RF tag;
FIG. 4 illustrates an example of a signal received by the reader/writer;
FIG. 5 illustrates the signal after being corrected with replacement data;
FIG. 6 is a diagram for describing the the difference between the embodiment of the present invention and a conventional example;
FIG. 7 illustrates how a continuous bit series in identification information is replaced with predetermined information; and
FIG. 8 illustrates how an intermittent bit series in identification information is replaced with predetermined information.

### DETAILED DESCRIPTION OF THE PREFERRED EMBODIMENTS

A description is given, with reference to the accompanying drawings, of an embodiment of the present invention.

An RF tag reader according to an embodiment of the present invention determines whether an error can be detected in identification information (UID) received from an RF tag, after the identification information is partially replaced with predetermined data. An error is never detected in the predetermined information, and therefore, a resend request would never be made due to an error in the predetermined information. Accordingly, the number of times that the RF tag reader requests the RF tag to resend the identification information can be reduced compared to the conventional technology.

The identification information includes individual information that is unique to a specific management object accompanied by the RF tag and individual classification information that is common to unspecified management objects. The individual information is essential for identifying a management object. Meanwhile, the individual classification information other than the individual information is known to the RF tag reader, and does not affect the process of identifying the management object. By considering such different roles of the information, requests to resend the identification information due to errors in the individual classification information are prevented from being made. This prevents unnecessary cases of resending identification information.

The individual classification information can include appropriate items according to the purpose or the user. The number of bits to be replaced in the individual classification information can be varied. All or part of the identification classification information received from the RF tag can be replaced with the predetermined information. A continuous series of bits or intermittent series of bits in the identification information received from the RF tag can be replaced with predetermined information. These variations are advantageous in terms of applying the present invention to a broad range of purposes.

The technique according to an embodiment of the present invention can be realized with hardware or both software and hardware. In order to install the technique according to the present invention in an actual system, only the RF tag reader needs to be improved. This is advantageous in terms of easily realizing the technique according to an embodiment of the present invention.

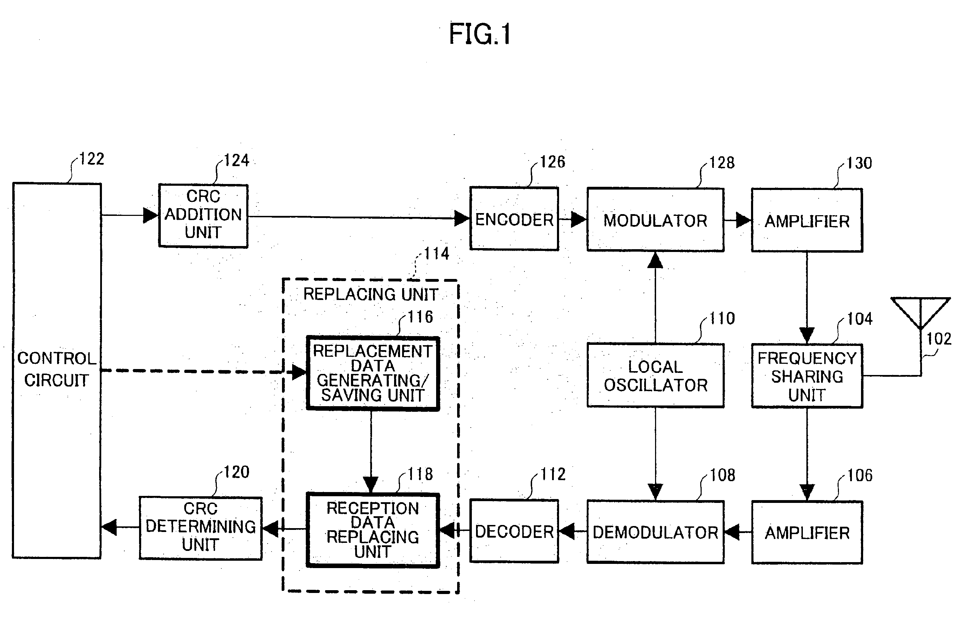

FIG. 1 is a functional block diagram of a reader/writer (or RF tag reader) according to an embodiment of the present invention. FIG. 1 illustrates an antenna 102, a frequency sharing unit 104, an amplifier 106, a demodulator 108, a local oscillator 110, a decoder 112, a replacing unit 114, a replacement data generating/saving unit 116, a reception data replacing unit 118, a CRC determining unit 120, a control circuit 122, a CRC addition unit 124, an encoder 126, a modulator 128, and an amplifier 130.

The frequency sharing unit 104 separates transmission signals and reception signals communicated via the antenna 102.

The amplifier 106 appropriately adjusts power of reception signals received by the reader/writer.

The demodulator 108 performs frequency conversion, demodulation, filtering, etc., on reception signals.

The local oscillator 110 supplies a local oscillator frequency to the demodulator 108 and the modulator 128.

The decoder 112 decodes the encoded reception signals.

The replacing unit 114 includes the replacement data generating/saving unit 116 and the reception data replacing unit 118. The replacement data generating/saving unit 116 holds or generates predetermined replacement data. The predetermined replacement data is appropriately specified according to the purpose for which the reader/writer is to be used. For example, one or more of an ISO header, an IC manufacturer code, a company code, and a product code can be used as the replacement data. The reception data replacing unit 118 replaces part of the data in a reception signal with the replacement data. Details of operations of the replacing unit 114 are described below.

The CRC determining unit 120 determines whether there is an error in a reception signal including replacement data. The CRC determining unit 120 determines whether there is an error by a cyclic redundancy check (CRC) method in the present embodiment; however, any appropriate error check method can be employed.

The control circuit 122 controls the operations of the elements in the reader/writer. One or more of the elements in the reader/writer are software; the control circuit 122 can be realized with hardware or both software and hardware.

The CRC addition unit 124 adds a CRC check bit to the transmission signal. In a case where an error check method other than the CRC method is employed, appropriate information for the employed method is added to the transmission signal for the purpose of error checking.

The encoder 126 encodes transmission signals.

The modulator 128 performs frequency conversion, modulation, filtering, etc., on transmission signals.

The amplifier 130 appropriately adjusts the power of transmission signals.

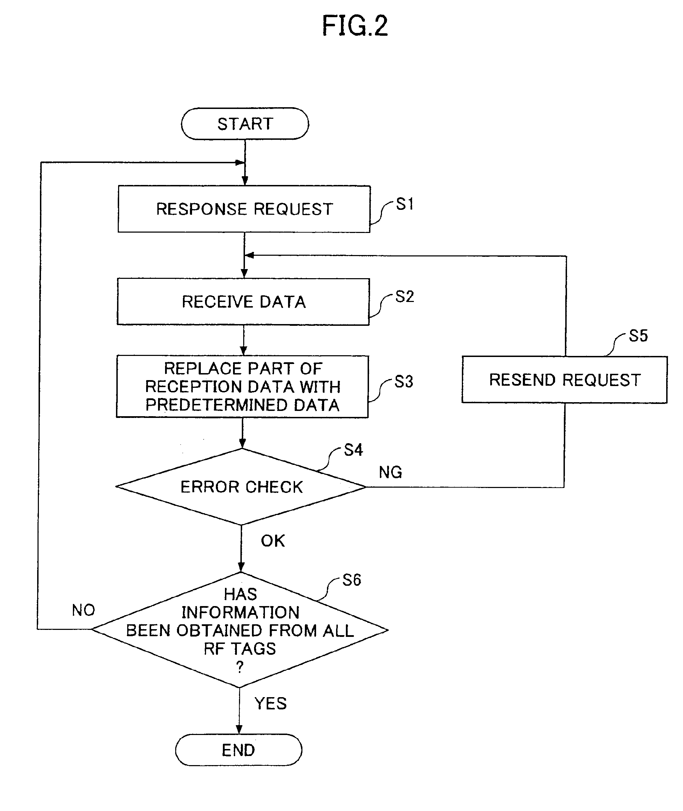

FIG. 2 is a flowchart of the operation of the reader/writer according to the embodiment of the present invention.

In step S1, the reader/writer sends a response request signal to a nearby RF tag. Communications between an RF tag and the reader/writer are performed in a one-on-one manner. Communications with multiple RF tags are performed by the TDM method, where one-on-one communication is performed in each time slot.

In step S2, signals (data) transmitted by the RF tag in response to the response request signal are received by the reader/writer.

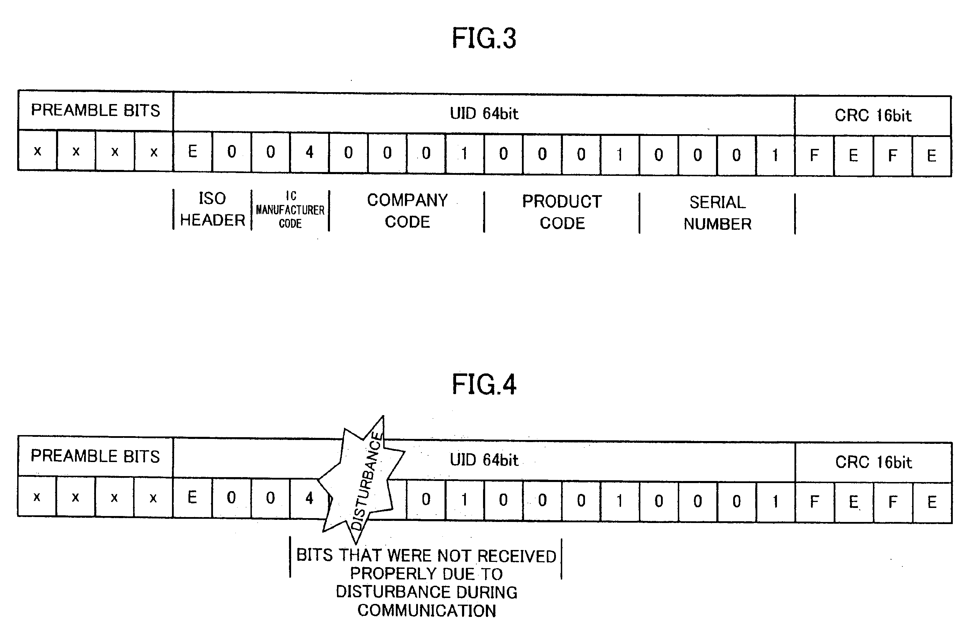

FIG. 3 illustrates an example of a signal transmitted by the RF tag. In this signal format, the signal includes preamble bits, identification information (UID), and CRC bits. In the example shown in FIG. 3, these are represented by hexadecimal digits except for the preamble bits. The preamble bits include information pertaining to overhead, which is determined by the employed communication protocol. The identification information includes an ISO header, an IC manufacturer code, a company code, a product code, and a serial number. These are merely examples of identification information; any other appropriate signal format can be employed in the present invention. The IC manufacture code indicates the manufacture of the integrated circuit (LSI) included in the RF tag. The company code indicates the entity that manages the products using the RF tags. The product code distinguishes the type of the management object accompanied by the RF tag. The management object can be, for example, a television set, a personal computer, or any other object that is to be managed. The serial number indicates information unique to each management object, such as a production number of the product. The CRC bits are added to be used for error checking. In the present embodiment, a particular calculation is performed on all of the 64 bits representing the identification information (UID), and the calculation result is added as the CRC bits. That is, the entire identification information (UID) is the object of error checking.

FIG. 4 illustrates an example of a signal received by the reader/writer. As shown in FIG. 4, the serial number in the identification information (UID) is received properly; however, it is assumed that the IC manufacturer code, the company code, and the product code were not received properly due to a disturbance in the wireless environment.

Referring back to FIG. 2, in step S3, part of the reception data is replaced with predetermined data. In the present embodiment, the management object accompanied by the RF tag is a particular product of a particular company (for example, a television set sold by company A). Thus, the ISO header, the IC manufacturer code, the company code, and the product code are common to all management objects; only the serial number is different for each management object. As a matter of convenience in the description, information unique to a specific management object accompanied by an RF tag is referred to as "individual information" and information common to unspecified management objects is referred to as "individual classification information". In the above example, the ISO header, the IC manufacturer code, the company code, and the product code are individual classification information, whereas the serial number is individual information. In a case of managing inventory of books, the individual classification information can include information such as an International Standard Book Number (ISBN), and the individual number can include a number uniquely given to a book at the discretion of the book store managing the inventory. The individual classification information is already known to the reader/writer, which is assumed to be saved in the replacement data generating/saving unit 116 shown in FIG. 1 as known data. The individual classification information can be stored beforehand as known data or can be generated separately by some method.

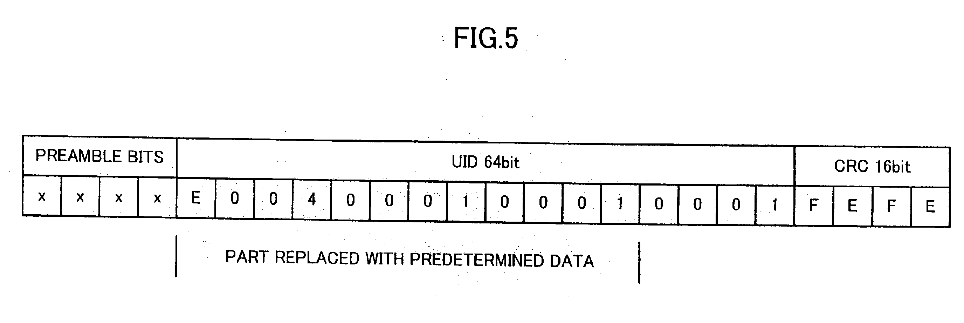

FIG. 5 illustrates the reception data after the individual classification information in the reception data is replaced with the replacement data available in the reader/writer. The reception data after replacement corresponds to the output signal from the reception data replacing unit 118 shown in FIG. 1.

In step S4 shown in FIG. 2, an error check is performed to check all of the identification information (UID) in the reception data after correction (after replacement). More specifically, a particular known calculation is performed in the reader/writer to check all 64 bits representing the corrected identification information (UID) (FIG. 5). The error check is performed by determining whether the calculation result coincides with the received CRC bits. When an error is detected, the flow proceeds to step S5. In the present embodiment, an error in the individual classification information, which is information other than the serial number in the identification information (UID), never causes the CRC check result to be NG (no good). This is because the individual classification information is forcibly changed into appropriate information in step S3. Accordingly, if the flow proceeds to step S5, it means that there is an error in the serial number in such a manner that the serial number cannot be read, and product management cannot be performed.

In such a case, in step S5, the reader/writer transmits a resend request signal, requesting the RF tag to resend the identification information (UID). In response to the request, the RF tag resends the identification information (UID), and the flow returns to step S2. The above-described steps are repeated.

When an error is not detected in step S4, in step S6, it is confirmed whether identification information is obtained from all RF tags. If there is an unprocessed RF tag, the flow returns to step S1, and the above-described steps are repeated for the unprocessed RF tag. If there are no unprocessed RF tags remaining, the flow ends.

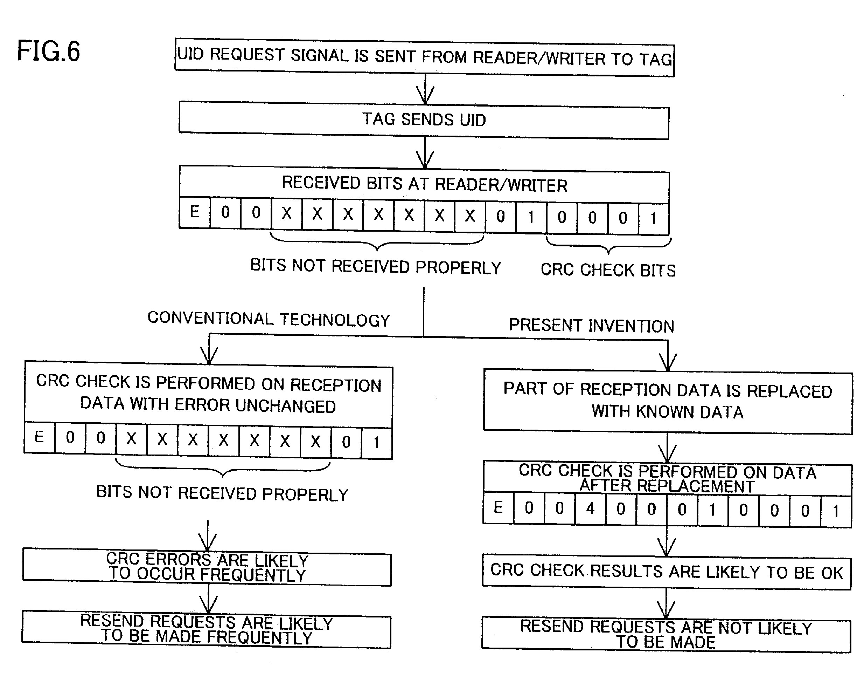

FIG. 6 is a diagram for describing the difference between the embodiment of the present invention and a conventional example. The parts relevant to the present embodiment are substantially the same as the procedure shown in FIG. 2. First, the reader/writer transmits a signal requesting UID to the tag. In response to the signal, the tag transmits the UID. In the example shown in FIG. 6, it is assumed that a disturbance occurs while the individual classification information in the UID is being transmitted, and the individual classification information is not properly received by the reader/writer. In the conventional example, the CRC check is immediately performed on the reception data. No matter which part of the UID includes an error, the CRC check result indicates an error (NG). Thus, CRC errors occur frequently, and resend requests are made frequently. As a result, even unnecessary parts of the UID are likely to be resent. Meanwhile, in the present embodiment, part of the reception data is replaced by known data (individual classification information), and the CRC check is performed on the data after the replacement. The replaced parts would never cause an error, and therefore, the CRC check results would often indicate OK. If the CRC check result indicates NG, it is because there is an error in the individual information. In this case, it is really necessary to resend the information. According to the present embodiment, the number of times of resending the information is reduced, and the information is resent only when it is really necessary.

In the above example, in the UID, the ISO header, the IC manufacturer code, the company code, and the product code are common to all management objects, and correspond to the individual classification information. Meanwhile, only the serial number is different for each management object, and corresponds to the individual information. However, the compositions of the individual classification information and the individual information are not limited thereto. For example, in a case where there are many television sets and personal computers of company A, the ISO header, the IC manufacturer code, and the company code can correspond to the individual classification information, and the product code and the serial number can correspond to the individual information. Furthermore, contents of the individual classification information and the individual information do not have to be fixed; they can be appropriately changed according to the circumstances or the user. The number of bits in the individual classification information to be replaced can be changed according to the purpose for which the reader/writer is used, the time period during which the reader/writer is used, the user of the reader/writer, or for any other reason. In general, for the purpose of accurately identifying various information items, the number of bits of the individual classification information is preferably small (zero bits in the extreme case), although the number of times of resending the identification information would be increased. Meanwhile, for the purpose of reducing the number of times of resending the identification information, the number of bits of the individual classification information is preferably large. Furthermore, information items such as "company code" and "product code" many not necessarily be replaced all at once in the present embodiment. For example, only the top two bits of the product code may be common to multiple management objects. In the serial number, some bits may common to multiple management objects. Therefore, the number of bits in the identification information to be replaced may depend not only on information items but also on units of bits.

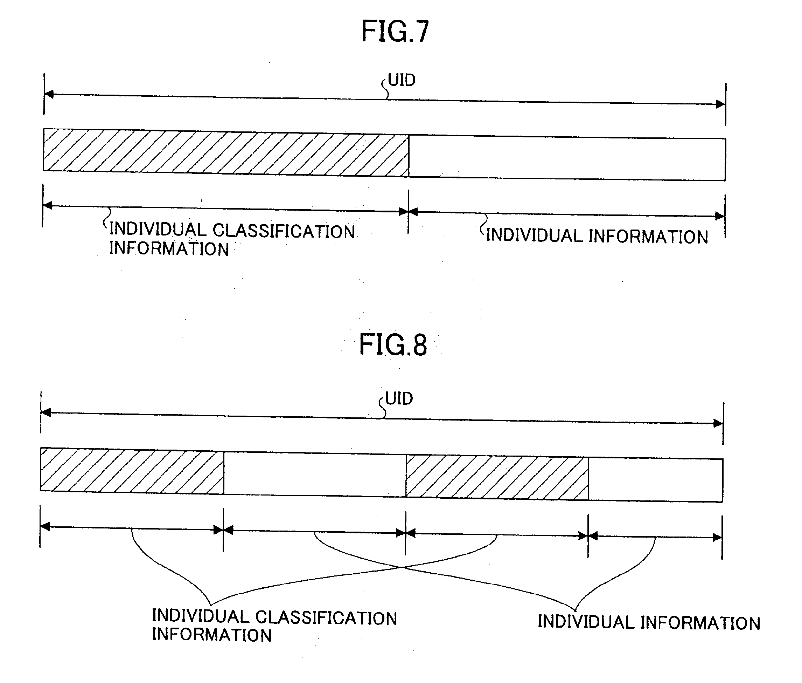

As shown in FIG. 7, in the above example, a continuous series of bits in the identification information received from the RF tag is replaced by predetermined information. However, as shown in FIG. 8, an intermittent series of bits in the identification information received from the RF tag can be replaced by predetermined information. In this manner, the present embodiment is applicable to signals of various formats.

The present invention is not limited to the specifically disclosed embodiment, and variations and modifications may be made without departing from the scope of the present invention.

## Claims

1. An RF tag reader comprising:
a receiving unit (102, 104, 106, 108, 110, 112) configured to receive, from an RF tag, data comprising at least identification information that includes a first part and a second part;
an error determining unit (120) configured to determine whether an error is present in the received data; and
a transmitting unit (102, 104, 110, 126, 128, 130) configured to transmit a request to the RF tag to resend the data in the event that an error is detected in the received data; and
**characterized in that**
the reader further comprises:
a replacing unit (114) configured to replace the first part of the identification information with predetermined information, thereby turning the identification information into partially-replaced identification information,
said predetermined information comprising information stored or generated at the RF tag reader;
wherein said error determining unit (120) is configured to carry out an error determining process on said partially-replaced identification information; and
wherein said predetermined information is such that, when the second part of the identification information is properly received, said error determining unit does not detect an error in the partially-replaced identification information,
wherein said partially-replaced identification information includes the predetermined information having replaced the first part and the properly-received second part.

2. The RF tag reader according to claim 1, wherein:
the first part of the identification information comprises individual classification information that is common to unspecified management objects and the second part of the identification information comprises at least individual information that is unique to a specific management object accompanied by the RF tag.

3. The RF tag reader according to claim 2, wherein:
all or part of the individual classification information received from the RF tag is replaced with the predetermined information.

4. The RF tag reader according to claim 3, wherein:
a number of bits in the individual classification information, which bits are replaced with the predetermined information, is variable.

5. The RF tag reader according to claim 1, wherein:
the first part of the identification information comprises a series of bits.

6. The RF tag reader according to claim 1, wherein:
the first part of the identification information comprises an intermittent series of bits.

7. The RF tag reader according to claim 1, wherein:
the predetermined information comprises known information stored in a memory.

8. The RF tag reader according to claim 1, wherein:
the predetermined information comprises information generated by the RF tag reader.

9. The RF tag reader according to claim 1, wherein :
the error determining unit (120) is configured to determine whether an error can be detected by a cyclic redundancy check method.

10. The RF tag reader according to claim 1, wherein:
the identification information comprises at least a serial number of a management object, a type of the management object, and a company code.

11. A method employed by an RF tag reader, the method comprising the steps of:
receiving, from an RF tag, data comprising at least identification information (S2) that includes a first part and a second part;
carrying out an error determining step (S4) to determine whether an error is present in the received data; and
transmitting a request to the RF tag to resend the data in the event that an error is detected in the received data (S5), **characterized by** the step of:
replacing the first part of the identification information with predetermined information (S3), thereby turning the identification information into partially-replaced identification information, said predetermined information comprising information stored or generated at the RF tag reader;
wherein said error determining step is carried out on said partially-replaced identification information; and
wherein said predetermined information is such that, when the second part of the identification information is properly received, the error determining step does not detect an error in the partially-replaced identification information,
wherein said partially-replaced identification information includes the predetermined information having replaced the first part and the properly-received second part.

12. The method according to claim 11, wherein:
the first part of the identification information comprises individual classification information that is common to unspecified management objects and the second part of the identification information comprises individual information that is unique to a specific management object accompanied by the RF tag.

13. The method according to claim 12, wherein:
all or part of the individual classification information received from the RF tag is replaced with the predetermined information.

14. The method according to claim 13, wherein:
a number of bits in the individual classification information, which bits are replaced with the predetermined information, is variable according to an environment in which the data is received.

## Patentansprüche

1. RF-Etikettenleser mit:
einer Empfangseinheit (102, 104, 106, 108, 110, 112), die konfiguriert ist, um von einem RF-Etikett Daten zu empfangen, die wenigstens Identifikationsinformationen umfassen, die einen ersten Teil und einen zweiten Teil enthalten;
einer Fehlerbestimmungseinheit (120), die konfiguriert ist, um zu bestimmen, ob in den empfangenen Daten ein Fehler vorhandenen ist; und
einer Sendeeinheit (102, 104, 110, 126, 128, 130), die konfiguriert ist, um eine Aufforderung an das RF-Etikett zu senden, um die Daten noch einmal zu schicken, falls ein Fehler in den empfangenen Daten detektiert wird;
**dadurch gekennzeichnet, dass**
der Leser ferner umfasst:
eine Austauscheinheit (114), die konfiguriert ist, um den ersten Teil der Identifikationsinformationen gegen vorbestimmte Informationen auszutauschen, wodurch die Identifikationsinformationen in teilweise ausgetauschte Identifikationsinformationen verwandelt werden,
welche vorbestimmten Informationen Informationen umfassen, die im RF-Etikettenleser gespeichert sind oder erzeugt werden;
bei dem die Fehlerbestimmungseinheit (120) konfiguriert ist, um einen Fehlerbestimmungsprozess an den teilweise ausgetauschten Identifikationsinformationen auszuführen; und
bei dem die vorbestimmten Informationen so sind, dass dann, wenn der zweite Teil der Identifikationsinformationen korrekt empfangen wird, die Fehlerbestimmungseinheit in den teilweise ausgetauschten Identifikationsinformationen keinen Fehler detektiert,
bei dem die teilweise ausgetauschten Identifikationsinformationen die vorbestimmten Informationen enthalten, die gegen den ersten Teil ausgetauscht wurden, sowie den korrekt empfangenen zweiten Teil.

2. RF-Etikettenleser nach Anspruch 1, bei dem:
der erste Teil der Identifikationsinformationen individuelle Klassifizierungsinformationen umfasst, die unspezifizierten Verwaltungsobjekten gemeinsam sind, und der zweite Teil der Identifikationsinformationen wenigstens individuelle Informationen umfasst, die für ein spezifisches Verwaltungsobjekt, das durch das RF-Etikett begleitet wird, einzigartig sind.

3. RF-Etikettenleser nach Anspruch 2, bei dem:
alle oder ein Teil der individuellen Klassifizierungsinformationen, die von dem RF-Etikett empfangen werden, gegen die vorbestimmten Informationen ausgetauscht werden.

4. RF-Etikettenleser nach Anspruch 3, bei dem:
eine Anzahl von Bits in den individuellen Klassifizierungsinformationen, welche Bits gegen die vorbestimmten Informationen ausgetauscht werden, variabel ist.

5. RF-Etikettenleser nach Anspruch 1, bei dem:
der erste Teil der Identifikationsinformationen eine Bitfolge umfasst.

6. RF-Etikettenleser nach Anspruch 1, bei dem:
der erste Teil der Identifikationsinformationen eine unterbrochene Bitfolge umfasst.

7. RF-Etikettenleser nach Anspruch 1, bei dem:
die vorbestimmten Informationen bekannte Informationen umfassen, die in einem Speicher gespeichert sind.

8. RF-Etikettenleser nach Anspruch 1, bei dem:
die vorbestimmten Informationen Informationen umfassen, die durch den RF-Etikettenleser erzeugt werden.

9. RF-Etikettenleser nach Anspruch 1, bei dem:
die Fehlerbestimmungseinheit (120) konfiguriert ist, um durch ein zyklisches Blocksicherungsverfahren zu bestimmen, ob ein Fehler detektiert werden kann.

10. RF-Etikettenleser nach Anspruch 1, bei dem:
die Identifikationsinformationen wenigstens eine laufende Nummer eines Verwaltungsobjektes, einen Typ des Verwaltungsobjektes und einen Firmencode umfassen.

11. Verfahren, das durch einen RF-Etikettenleser angewendet wird, welches Verfahren die Schritte umfasst:
Empfangen, von einem RF-Etikett, von Daten, die wenigstens Identifikationsinformationen umfassen (S2), die einen ersten Teil und einen zweiten Teil enthalten:
Ausführen eines Fehlerbestimmungsschrittes (S4), um zu bestimmen, ob in den empfangenen Daten ein Fehler vorhanden ist; und
Senden einer Aufforderung an das RF-Etikett, um die Daten noch einmal zu schicken, falls ein Fehler in den empfangenen Daten detektiert wird (S5),
**gekennzeichnet durch** den Schritt:
Austauschen des ersten Teils der Identifikationsinformationen gegen vorbestimmte Informationen (S3), wodurch die Identifikationsinformationen in teilweise ausgetauschte Identifikationsinformationen verwandelt werden, welche vorbestimmten Informationen Informationen umfassen, die im RF-Etikettenleser gespeichert sind oder erzeugt werden;
bei, dem der Fehlerbestimmungsschritt an den teilweise ausgetauschten Identifikationsinformationen ausgeführt wird; und
bei dem die vorbestimmten Informationen so sind, dass dann, wenn der zweite Teil der Identifikationsinformationen korrekt empfangen wird, der Fehlerbestimmungsschritt in den teilweise ausgetauschten Identifikationsinformationen keinen Fehler detektiert,
bei dem die teilweise ausgetauschten Identifikationsinformationen die vorbestimmten Informationen enthalten, die gegen den ersten Teil ausgetauscht wurden, sowie den korrekt empfangenen zweiten Teil.

12. Verfahren nach Anspruch 11, bei dem:
der erste Teil der Identifikationsinformationen individuelle Klassifizierungsinformationen umfasst, die unspezifizierten Verwaltungsobjekten gemeinsam sind, und der zweite Teil der Identifikationsinformationen individuelle Informationen umfasst, die für ein spezifisches Verwaltungsobjekt, das durch das RF-Etikett begleitet wird, einzigartig sind.

13. Verfahren nach Anspruch 12, bei dem:
alle oder ein Teil der individuellen Klassifizierungsinformationen, die von dem RF-Etikett empfangen werden, gegen die vorbestimmten Informationen ausgetauscht werden.

14. Verfahren nach Anspruch 13, bei dem:
eine Anzahl von Bits in den individuellen Klassifizierungsinformationen, welche Bits gegen die vorbestimmten Informationen ausgetauscht werden, gemäß einer Umgebung, in der die Daten empfangen werden, variabel ist.

## Revendications

1. Lecteur d'étiquettes RF comportant :
une unité de réception (102, 104, 106, 108, 110, 112) configurée pour recevoir, depuis une étiquette RF, des données comportant au moins une information d'identification qui comprend une première partie et une seconde partie ;
une unité de détermination d'erreur (120) configurée pour déterminer si une erreur est présente dans les données reçues ; et
une unité de transmission (102, 104, 110, 126, 128, 130) configurée pour transmettre une requête à l'étiquette RF afin de renvoyer les données dans le cas où une erreur est détectée dans les données reçues ; et
**caractérisé en ce que** le lecteur comporte en outre :
une unité de remplacement (114) configurée pour remplacer la première partie de l'information d'identification par une information prédéterminée, transformant ainsi l'information d'identification en information d'identification partiellement remplacée,
ladite information prédéterminée comportant une information mémorisée ou générée dans le lecteur d'étiquettes RF ;
dans lequel ladite unité de détermination d'erreur (120) est configurée pour effectuer un processus de détermination d'erreur concernant ladite information d'identification partiellement remplacée ; et
dans lequel ladite information prédéterminée est telle que, lorsque la seconde partie de l'information d'identification est correctement reçue, ladite unité de détermination d'erreur ne détecte pas d'erreur dans l'information d'identification partiellement remplacée,
dans lequel ladite information d'identification partiellement remplacée comprend l'information prédéterminée ayant remplacé la première partie et la seconde partie correctement reçue.

2. Lecteur d'étiquettes RF selon la revendication 1, dans lequel :
la première partie de l'information d'identification comporte une information de classification individuelle qui est commune aux objets de gestion non spécifiés et la seconde partie de l'information d'identification comporte au moins une information individuelle qui est unique à un objet de gestion spécifique accompagné par l'étiquette RF.

3. Lecteur d'étiquettes RF selon la revendication 2, dans lequel :
toute ou partie de l'information de classification individuelle reçue depuis l'étiquette RF est remplacée par l'information prédéterminée.

4. Lecteur d'étiquettes RF selon la revendication 3, dans lequel :
un nombre de bits dans l'information de classification individuelle, lesquels bits sont remplacés par l'information prédéterminée, est variable.

5. Lecteur d'étiquettes RF selon la revendication 1, dans lequel :
la première partie de l'information d'identification comporte une série de bits.

6. Lecteur d'étiquettes RF selon la revendication 1, dans lequel :
la première partie de l'information d'identification comporte une série intermittente de bits.

7. Lecteur d'étiquettes RF selon la revendication 1, dans lequel :
l'information prédéterminée comporte une information connue mémorisée dans une mémoire.

8. Lecteur d'étiquettes RF selon la revendication 1, dans lequel :
l'information prédéterminée comporte une information générée par le lecteur d'étiquettes RF.

9. Lecteur d'étiquettes RF selon la revendication 1, dans lequel :
l'unité de détermination d'erreur (120) est configurée pour déterminer si une erreur peut être détectée par un procédé de contrôle de redondance cyclique.

10. Lecteur d'étiquettes RF selon la revendication 1, dans lequel :
l'information d'identification comporte au moins un numéro de série d'un objet de gestion, un type d'objet de gestion, et un code de société.

11. Procédé utilisé par un lecteur d'étiquettes RF, le procédé comportant les étapes consistant à :
recevoir, à partir d'une étiquette RF, des données comportant au moins une information d'identification (S2) qui comprend une première partie et une seconde partie;
exécuter une étape de détermination d'erreur (S4) pour déterminer si une erreur est présente dans les données reçues ; et
transmettre une requête à l'étiquette RF pour renvoyer les données dans le cas où une erreur est détectée dans les données reçues (S5),
**caractérisé par** l'étape consistant à :
remplacer la première partie de l'information d'identification par une information prédéterminée (S3), transformant ainsi l'information d'identification en une information d'identification partiellement remplacée, ladite information prédéterminée comportant une information mémorisée ou générée dans le lecteur d'étiquettes RF ;
dans lequel ladite étape de détermination d'erreur est effectuée concernant ladite information d'identification partiellement remplacée ; et
dans lequel ladite information prédéterminée est telle que, lorsque la seconde partie de l'information d'identification est correctement reçue, l'étape de détermination d'erreur ne détecte pas d'erreur dans l'information d'identification partiellement remplacée,
dans lequel ladite information d'identification partiellement remplacée comprend l'information prédéterminée ayant remplacé la première partie et la seconde partie correctement reçue.

12. Procédé selon la revendication 11, dans lequel :
la première partie de l'information d'identification comporte une information de classification individuelle qui est commune aux objets de gestion non spécifiés et la seconde partie de l'information d'identification comporte une information individuelle qui est unique à un objet de gestion spécifique accompagné par l'étiquette RF.

13. Procédé selon la revendication 12, dans lequel :
toute ou partie de l'information de classification individuelle reçue depuis l'étiquette RF est remplacée par l'information prédéterminée.

14. Procédé selon la revendication 13, dans lequel :
un nombre de bits dans l'information de classification individuelle, lesquels bits sont remplacés par l'information prédéterminée, est variable concernant un environnement dans lequel les données sont reçues.
